# EUROPEAN PATENT APPLICATION

(11) **EP 2 611 097 A1**
(43) Date of publication of application: **03.07.2013**
(21) Application number: 11306795.3
(22) Date of filing: 28.12.2011
(51) Int. Cl.: H04L 29/06

(54) **Method for authenticating a user using a second mobile device**

(71) Applicant: Gemalto SA, 92190 Meudon (FR)
(72) Inventor: Gautier, Arnaud, 92190 MEUDON (FR)

(57) **Abstract**

The invention relates to a method for authenticating a user from a first mobile device (1) to an application server (4) for a current session, characterized in that it comprises connecting to said application server (4) with the phone number of a second mobile device (2).

## Description

### FIELD OF THE INVENTION

The present invention relates generally to authentication and more specifically to a method for an authentication to a content provider by a user.

### BACKGROUND OF THE INVENTION

Currently security is becoming more and more important and is more and more a priority for many content providers, for example Facebook provides OTP SMS in addition to login/password, full https support...

A web content provider offers a login/password type for authenticating someone and in many cases a user has to remember a lot of couple login/password or uses the same password for different content providers, or in may cases he uses very weak passwords such as a family name, a date of birth,

Password manager applications consist in registering different passwords by a same application on a same PC. Unfortunately such applications do not necessarily offer much portability. They are not integrated with content provider. Indeed a user has to login with the same device on which such application is installed. The storage of the login&password storage on the PC is then less secured. There is a need to download and install additional softwares.

A PKI (Public Key Infrastructure) solution requires heavy deployment and maintenance cost on backend.

Other solutions proposes to a user to pre-register his phone number to his account. When trying to log-in, he submit its login and password as usual, but then the content provider requests the user to enter a one-time-password (OTP). At the same time, this OTP is sent by SMS to the number pre-registered to the user. The user has then to enter this OTP on the web page to finalize his login operation.

There is a need for an easier solution which provides less user interactions and a better user experience.

It is then an object of the invention to provide a method for an authentication to a content provider by a user.

Thereto, the present invention provides a method for authenticating a user from a first mobile device to an application server for a current session, characterized in that it comprises connecting to said application server with the phone number of a second mobile device.

According to other aspects of the invention,
- the method may comprise
   ○ a step of sending a request to login to an application of the application server from said first mobile device to the application server, said request carrying the phone number of the second mobile device.
   ○ a step of requesting by the application server to an authentication server login data related to the current session and for the received phone number;
   ○ a step of sending a SMS message from the authentication server gateway to the second mobile device, said message comprising an application server identifier and requesting login data from the user;
   o a step of sending to the authentication server gateway an SMS message comprising login data related to the current session and a identifier of a secure element embedded in the second mobile device so as to identify the secure element;
   o a step of sending login data to the first mobile device to the by the authentication server gateway.
- the method may comprises a step of encrypting login data with a unique key attached to said secure element of the second mobile device;
- the method may comprise decrypting login data by the authentication server gateway;
- the method may comprise a step of generating a challenge by the application server;
- the method may comprise a step of sending said challenge to the authentication server gateway during the step of requesting by the application server to the authentication server login data related to the current session and to the phone number of the second mobile device;
- the method may comprise the step of giving a unique Callback URL by the application server so as the authentication server gateway returns immediately.
- the method may comprise a step of requesting the login data by the authentication gateway server to the application server, said request targeting the callback url;
- the method may comprise a step of sending a response to the step of requesting the login data by the authentication gateway server to the application server after the step of sending a response to the first mobile device;
- the method may comprise a step of entering a PIN code after the step of sending login data related to the current session with the application server identifier by the second mobile device to the authentication server gateway.

The various aspects, features and advantages of the invention will become more fully apparent to those having ordinary skill in the art upon careful consideration of the following Detailed Description, given by way of example thereof, with the accompanying drawings described below:
**FIG.1** schematically shows a flowchart diagram of a first embodiment.
**FIG.2** schematically shows a flowchart diagram of a second embodiment.

### DETAILED DESCRIPTION

The present invention may be understood according to the detailed description provided herein.

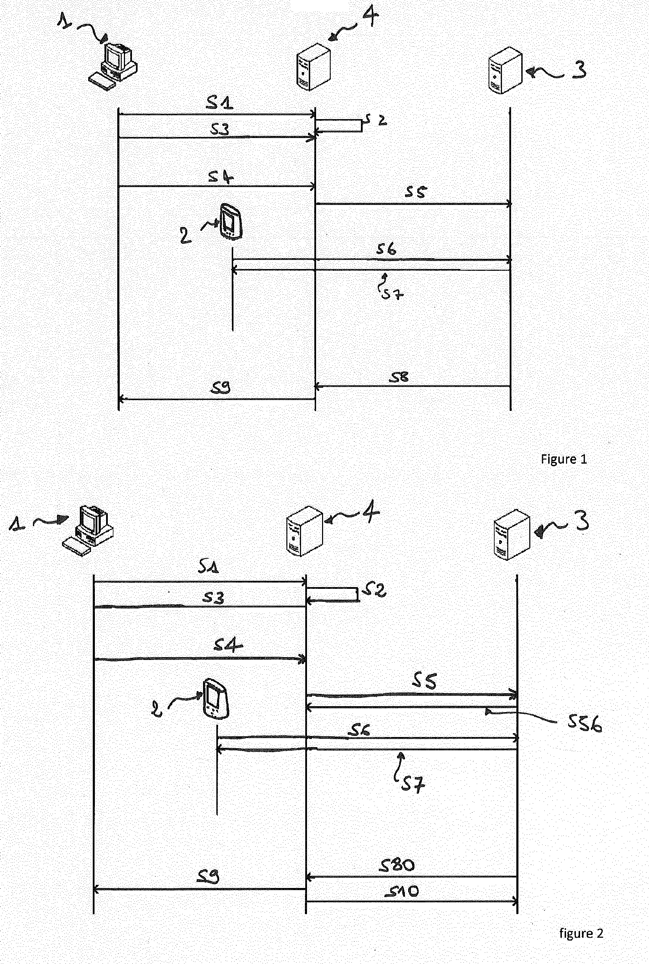

Shown in figure 1 is an authentication system comprising a first mobile device 1 and a second mobile device 2 of a user such as for example a personal computer 1 and a mobile phone 2, an authentication server gateway 3, and an application server or content provider 4.

The second mobile device 2 such as a mobile phone comprises a secure element, non represented, on which an application adapted for login/password management is stored, such as for example a smart card with an STK login/password manager application. This application is responsible for storing securely the login/password, to provide a way for the user to edit its login/password inside the application, and to exchange securely those login/passwords with the authentication server gateway.

The content provider 3 integrates with the authentication server gateway 3 and trusts the authentication server gateway 3. This can be achieved by different ways: at network level by using VPN between both parties. Communication protocol is HTTPS and at authentication level, dual authentication can be used.

The method according to the invention comprises for example opening a browser from the first mobile device 1 in order to access to a login page of the application server 4, and requesting a web page from the application server 4 through an HTTP request in a step S1. In response to this HTTP request received from the first mobile device 1, the application server 4 returns an HTTP response in a step S3. A login page is then displayed for authenticating the user. The login page comprises an input field for the user to enter his phone number. The user has only his phone number to type-in and submits it for example by clicking on the corresponding field.

Consequently, in step S4, the first mobile device sends a HTTP request to login to the application server 4. The login request S4 carries the phone number entered by the user of the second mobile device 2.

In step S5, the application server 4 then reaches the authentication server gateway 3 as soon as it receives the login request of the step S4 so as to retrieve the login and password for the current user HTTP session. For doing so, an HTTP(S) request is sent to the authentication server gateway 3 requesting login data, e.g. the login and the password related to the current session. The request also carried the phone number entered by the user of the second mobile device 2.

As the authentication server gateway 3 is requested a login/password for the input phone number, it sends a SMS-MT (SMS Mobile-Terminated) to the application on the second mobile device 2, i.e. to the (STK application password manager embedded in the second mobile device 2, during a step S6. To achieve this, the authentication server gateway actually sends the SMS-MT to the phone number entered by the user. This SMS-MT also comprises an application server identifier ID_AP so as to identify the content provider to differentiate among many. The authentication gateway then waits for a SMS-MO (SMS Mobile Originated) response from the second mobile device 2 before answering the HTTP request from the application server 4.

The method comprises then the step of proposing to the user to choose the login/password data to submit for authenticating himself to the current application. The embedded application for this part of the invention works in a similar manner than a password manager application. Indeed, on the second mobile device 2, a popup STK user-interface appears when the SMS-MT is received. The user can then see the request for login/password and can authorize it or decline it.

When authorizing, the user chooses which login/password among those proposed by the STK application he wishes to send. Optionally, In the incoming SMS-MT, the application server identifier ID_AP is used as default value in case multiple accounts, i.e. multiple logins/passwords are stored for different application providers. For example, if the STK password manager has logins and passwords for "google" and "facebook", then the STK application picks-up the right credentials based on the application identifier from the SMS-MT.

If the user accepts, the login and the password for the current session are sent in a step S7, all encrypted, to the authentication server gateway 3 through the SMS-MO. The SMS-MO comprises in clear an identifier of the embedded secure element in the second mobile device 2 so as the authentication server gateway can identify the originating embedded secure element. The SMS-MO comprises for example the ICCID of the SIM card embedded in the second mobile device 2. The login and the password are advantageously encrypted with a key unique to each SIM card. The unique keys are a pre-shared secret between the second mobile device 2 and the authentication server gateway 3. When the SMS-MO reaches the authentication server gateway 3, the authentication server gateway 3 is able to find out the pre-shared key from the second mobile device 2 identifier.

The SMS-MT and SMS-MO are related to each other using a unique message identifier placed in the SMS-MT message and repeated in the SMS-MO. This allows the authentication server gateway 3 to find the related pending login request from the application server 4 by combining the phone number and this message identifier.

In a further step, using the ICCID, the authentication server gateway 3 uses the right and the unique key to decrypt the received login and password from the second mobile device 2. The encryption or decryption algorithm is a also pre-shared secret. Following examples are not limited examples: it can be a DES algorithm with a 8 bytes key, a Triple DES with 24 bytes key, ...

The method comprises the step S8 of sending a HTTP response with the login and password of the user from the authentication server 3 to the application server 4. At this step, the application server 4 has received the login and password of the user and it can continue its traditional login procedure. The method then comprises a step S9 of sending an HTTPS response from the application server 4 to the initial login request of step S1. The application server 4 sends the login page response.

In another embodiment, for each login request from the first mobile device to an application server 4, in a step S2, after the step S1, a challenge is generated by the application server 4 and displayed on the login page. The HTTPS request step S4 sent by the first mobile device 1 to the application server 4, the HTTPS request step S5 sent by the application server 4 to the authentication server gateway 3, the step S6 of sending a SMS-MT to the STK application password manager embedded in the second mobile device 2 also carry the challenge.

In this embodiment, when the embedded application invites the user for accepting or rejecting the login operation, e.g. after the step S6, the challenge is displayed to the user so as he can advantageously check that the session is bound to the login request of his request of step S1.

In another embodiment, all accesses to the embedded application stored logins and passwords are protected by an applicative PIN code. When enabled, the user must enter applicative PIN code for every login request. Thus before the user chooses the login/password to send to the authentication gateway in step S7, the method comprises requesting a PIN code to the user.

It will be well understood that a request may be HTTP or HTTPS request. Using HTTPS is advantageously preferred for security reason such as the encryption of the HTTP exchange.

As represented in figure 2, in another embodiment, the application server 4 login system requires to scale more because the login request will last longer time. The end-user HTTP login request will finish after sending SMS-MT, receiving SMS-MO, .... Using this method, each HTTP login request by end-user will last much longer time than traditional login because the application server needs to get the login/password from the authentication gateway and this step itself requires sending/receiving SMS. This time keeps system resource on hold for much longer time, i.e. few hundreds ms to few seconds for a resource like TCP connection ....

To workaround this problem at least between the application server and the authentication server gateway 3, an alternative communication protocol is put in place between the application server and the authentication gateway. In this alternative embodiment, the authentication server gateway 3 returns immediately to requests from application server, keeps a context of pending requests, with the callback URL for each login request, and later uses this callback URL for pushing the login/password information back to the application server through a HTTP request initiated by the authentication server gateway 3 to the application server using this callback URL

In this embodiment, in the step S5, the application server 4 also give a unique Callback URL so as the authentication server 3 returns immediately. The callback URL is the URL to request by HTTP(S) for the authentication gateway to notify the application server. The authentication server gateway then returns a HTTP(S) response in a step S56.

After the authentication gateway server 3 finds the keys for decrypting the received login and password received in step S7, the login and password are pushed back to the application server 4 using a HTTP or HTTPS request to the callback URL and containing the login and password in a step S80.

After the application server 4 sends a HTTP(S) response S9 as in figure 1 to the first mobile device 1, the application server 4 sends an HTTP(S) response to the authentication server gateway 3 in a step S10 as response to the HTTP(S) request of step S80.

It will be well understood that a single HTTP request can be used instead of a HTTPS request or vice versa, and or a single HTTP or HTTPS request can be replaced by two HTTP or two HTTPS requests.

The advantage of using callback URL is to lower system resource usage for both the application server 4 and the authentication server. When using callback URL, the application server 4 implements timeout mechanism to prevent from the authentication server gateway 3 which may never request the callback URL.

It will be well understood that the instead of the mobile phone number, the method may comprise using an « address » to reach the user. It can be in any form, but usually with dual-form authentication, with something that the user knows and something that the user has. Such authentication with something that belongs to user and that he carries is preferred. The second mobile device 2 may be a mobile phone or tablet... The user may for example use his email address when he is able to receive emails on his mobile device. The authentication server gateway 3 may then reach his mobile device 2 using the address mail.

It will be well understood that the first mobile device 1 and the second mobile device 2 can be the same.

Thanks to the invention, the user always has its credentials with him. Passwords are stronger and the method is advantageously easier to deploy.

## Claims

1. Method for authenticating a user from a first mobile device (1) to an application server (4) for a current session, **characterized in that** it comprises connecting to said application server (4) with the phone number of a second mobile device (2).

2. Method according to claim 1, **characterized in that** it comprises
a. a step of (S4) sending a request to login to an application of the application server (4) from said first mobile device (1) to the application server (4), said request carrying the phone number of the second mobile device (2).
b. a step (S5) of requesting by the application server (4) to an authentication server (3) login data related to the current session and for the received phone number;
c. a step (S6) of sending a SMS message from the authentication server gateway (3) to the second mobile device (2), said message comprising an application server identifier and requesting login data from the user;
d. a step (S7) of sending to the authentication server gateway (3) an SMS message comprising login data related to the current session and a identifier of a secure element embedded in the second mobile device (2) so as to identify the secure element;
e. a step (S9) of sending login data to the first mobile device (1) to the by the authentication server gateway (3).

3. Method according to claim 2, **characterized in that** it comprises a step of encrypting login data with a unique key attached to said secure element of the second mobile device (2).

4. Method according to any of the previous claim, **characterized in that** it comprises decrypting login data by the authentication server gateway (3).

5. Method according to any of the previous claims, **characterized in that** it comprises a step (S2) of generating a challenge by the application server (4).

6. Method according to claim 5, **characterized in that** it comprises a step of sending said challenge to the authentication server gateway (3) during the step (S5) of requesting by the application server (4) to the authentication server (3) login data related to the current session and to the phone number of the second mobile device (2).

7. Method according to any of the previous claims, **characterized in that** it comprises the step of giving a unique Callback URL by the the application server (4) so as the authentication server gateway (3) returns immediately.

8. Method according to claim 7, **characterized in that** it comprises a step (S80) of requesting the login data by the authentication gateway server (3) to the application server (4), said request targeting the callback url.

9. Method according to claim 8, **characterized in that** it comprises a step (S10) of sending a response to the step (S80) of requesting the login data by the authentication gateway server (3) to the application server (4) after the step (S9) of sending a response to the first mobile device (1).

10. Method according to one of the previous claims, **characterized in that** it comprises a step of entering a PIN code after the step (S6) of sending login data related to the current session with the application server identifier by the second mobile device (2) to the authentication server gateway (3).
